# EUROPÄISCHE PATENTSCHRIFT

(11) **EP 0 571 642 B1**
(45) Veröffentlichungstag und Bekanntmachung des Hinweises auf die Patenterteilung: **14.01.1998**
(21) Anmeldenummer: 92108334.1
(22) Anmeldetag: 18.05.1992
(51) Int. Cl.: H02J 3/18, G05F 1/70

(54) **Verfahren und Vorrichtung zur Erzeugung eines Synchronisiersignals für einen Steuersatz zur Ansteuerung eines Stromrichterventils eines gesteuerten Serienkompensators**
Method and device for generating a synchronisation signal for a control unit of a controlled valve of a series compensator
Procédé et dispositif d'obtention d'un signal de synchronisation pour un étage de commande d'une soupape commandée d'un compensateur série commandé

(43) Veröffentlichungstag der Anmeldung: 01.12.1993
(73) Patentinhaber: SIEMENS AKTIENGESELLSCHAFT, 80333 München (DE)
(72) Erfinder: Leowald, Karl-Friedrich, Dipl.-Ing., W-8525 Weiher (DE); Weiss, Stephan, Dipl.-Ing., W-8525 Uttenreuth (DE)

(56) Entgegenhaltungen:
- EP-A- 0 298 515
- EP-A- 0 442 455
- WO-A-87/04538
- IEEE TRANSACTIONS ON POWER DELIVERY Bd. 7, Nr. 2, April 1992, NEW YORK US Seiten 914 - 919 BOON-TECK OOI 'Solid-State Series Capacitive Reactance Compensators'

## Beschreibung

Die Erfindung bezieht sich auf ein Verfahren und eine Vorrichtung zur Erzeugung eines Synchronisiersignals für einen Steuersatz eines gesteuerten Serienkompensators, dessen Kondensator in eine Übertragungsleitung seriell eingebunden ist und dazu einen Parallelzweig, bestehend aus einer Spule und einem Stromrichterventil, aufweist.

Bei der Reihenkompensation werden üblicherweise Kondensatoren im Leitungszug eingesetzt, um den stromabhängigen Spannungsabfall auf der Leitung und den Übertragungswinkel in Stufen zu vermindern. Es handelt sich dabei um Kondensatorbänke, die als Ganzes oder in mehreren Teilkondensatoren (Segmenten) in Reihe zu- und abgeschaltet werden. Das Zu- und Abschalten des Kondensators geschieht dadurch, daß ein paralleler Leistungsschalter geöffnet bzw. geschlossen wird. Der Schutz des Kondensators bei Netzkurzschluß wird durch einen parallelen Ableiter, durch eine triggerbare Funkenstrecke und/oder durch einen parallelen Leistungsschalter gewährleistet.

Des weiteren ist eine Reihenkompensationsanlage bekannt, bei der durch eine zum Kondensator parallel geschaltete Drossel die Gesamtimpedanz dieses Reihenkompensators (ähnlich wie beim TCR (Thyristor Controlled Reactor) im statischen Kompensator) mit einem Stromrichterventil auf Hochspannungspotential stufenlos geregelt wird durch entsprechendes Zünden. Eine derartig gesteuerte Serienkompensation ist bekannt unter dem Begriff ASC (Advanced Series Compensation). Mit einem derartigen gesteuerten Serienkompensator kann die Dynamik der Reihenkompensation verbessert werden und die Gesamtimpedanz ist in einem gewissen Bereich regelbar, wobei die Impedanz von kapazitiv bis induktiv verändert werden kann.

Derartige Reihenkompensatoren sind im Aufsatz "Geregelte Parallel- und Reihenkompensation", abgedruckt in der DE-Zeitschrift "Elektrie", Band 45, 1991, März, Seiten 88 bis 90, vorgestellt. Außerdem ist ein derartiger gesteuerter Reihenkompensator, der in eine Übertragungsleitung integriert ist, in der internationalen Patentschrift WO 87/04538 beschrieben.

Die Funktion der geregelten Serienkompensationsanlage beruht auf der Ansteuerung eines Stromrichterventils, welche durch einen gezielten Umladevorgang durch die Spule eine für das Netz wirksame Impedanz erzeugen. Diese Ansteuerung muß sich periodisch wiederholen und ist auf die Spannung über dem Kondensator der gesteuerten Serienkompensationsanlage bezogen. Ein Steuersatz sorgt für eine zeitsynchrone Ansteuerung dieses Stromrichterventils. Dieser Steuersatz setzt Zündimpulse ab, die aus einem Synchronisiersignal und einem gewünschten, auf diesen bezogenen Steuerwinkel ermittelt werden. Eine nachgeschaltete Logik ermöglicht noch einen Schutzeingriff, um Zündungen bei Störfällen zu blockieren.

Aus den Nulldurchgängen der Synchronisierspannung wird jeweils der Startpunkt einer Rampe generiert. Der Schnittpunkt der Rampe mit einer dem Steuerwinkel reproduzierenden Geraden, ergibt den Zeitpunkt der Ventilansteuerung für die positive und die negative Halbwelle der Kondensatorspannung. Die nachgeschaltete Sperrlogik ermöglicht ein Blockieren der Zündimpulse zu Schutz- und Anfahrgründen. Eine Aufbereitungsschaltung gefolgt von Signal verstärkern paßt die Signale mit ihren Impulslängen den Erfordernissen der Ventilelektronik an. Als Synchronisierspannung wird die Kondensatorspannung des gesteuerten Serienkompensators verwendet.

Da die Kondensatorspannung im angestrebten Betrieb eine nicht sinusförmige Größe mit im Umladevorgang sich ändernden Nulldurcngängen ist, eignet sich diese Größe nicht zur stabilen Synchronisierung des Steuersatzes. Ebenso besteht die Gefahr einer Nulldurchgangsverschiebung aufgrund eines der Kondensatorspannung überlagerten Gleichspannungsanteils. Wird die Kondensatorspannung mit sich verändernden Nulldurchgängen als Synchronisiersignal verwendet, treten Stabilitätsprobleme im transienten Zustand während des Betriebes des gesteuerten Serienkompensators nahe der Resonanz auf. Im bygepassten Zustand des gesteuerten Serienkompensators ist der Serienkondensator kurzgeschlossen, wodurch am Kondensator keine Spannung menr abfällt. Somit existiert im bygepassten Zustand kein Synchronisiersignal für den Steuersatz.

Der Erfindung liegt nun die Aufgabe zugrunde, ein Verfahren und eine Vorrichtung zur Erzeugung eines Synchronisiersignals für einen Steuersatz zur Ansteuerung eines Stromrichterventils eines gesteuerten Serienkompensators anzugeben, ohne dabei die aufgeführten Nachteile zu haben.

Diese Aufgabe wird erfindungsgemäß gelöst durch die Merkmale des Anspruchs 1 und 4.

Der Steuersatz des gesteuerten Serienkompensators benötigt ein Synchronisiersignal, um das Stromrichterventil des gesteuerten Serienkompensators zu einer definierten Phasenlage der Kondensatcrspannung anzusteuern. Der Erfindung liegt nun die Erkenntnis zugrunde, daß, wenn die Kondensatorspannung infolge der aufgeführten Nachteile zu Betriebsstabilitätsproblemen führen kann, eine Ersatzgröße genommen wird, die derart weiterverarbeitet wird, daß man ein der Kondensatorspannung syncnrones Signal erhält. Als Ersatzgröße wird erfindungsgemäß einerseits der Leitungsstrom oder andererseits die Summe aus Kondensatorstrom und Ventilstrom genommen. Die Phasenlage dieses Signals wird mittels einer Nachlaufsynchronisation so modifiziert, daß dem Steuersatz ein Signal zur Verfügung steht, das der Phasenlage der Kondensatorspannung entspricht.

Bei einem vorteilhaften Verfahren wird die Ersatzgröße zuerst von Störgrößen, beispielsweise die 2. und 3. Harmonische, befreit, wodurch ebenfalls eine Phasenverschiebung erreicht wird. Der Vorteil dieses Verfahrens liegt darin, daß die Störgrößenbekämpfung und die Phasenkorrektur durch zwei Verfahrensschritte annähernd getrennt voneinander beeinflußbar sind.

Bei einer vorteilhaften Vorrichtung zur Durchführung des erfindungsgemäßen Verfahrens zur Erzeugung eines Synchronisiersignals besteht die Vorrichtung aus einer Filterkette und einer Nachlaufsynchronisation, wobei die Filterkette aus einem digitalen und einem analogen Filter besteht, die mittels einer Einrichtung zur Frequenzanpassung an die Leitungsfrequenz angepaßt werden und wobei bei der Nachlaufsynchronisation in Abhängigkeit der ermittelten Amplitude des Leitungsstromes mittels einer Einrichtung der Amplitudenanpassung eine Amplitudennormierung vorgenommen wird, da die Dynamik von der Amplitude abhängig ist.

Eine weitere vorteilhafte Vorrichtung besteht darin, daß das digitale Filter der Filterkette, die Einrichtung zur Frequenzanpassung und die Einrichtung zur Amplitudenanpassung mittels eines digitalen Signalprozessors realisisert sind. Außerdem ist die Nachlaufsynchronisation mittels eines digitalen Signalprozessors realisiert.

Zur weiteren Erläuterung des erfindungsgemäßen Verfahrens und der erfindungsgemäßen Vorrichtung zur Erzeugung eines Synchronisiersignals für einen Steuersatz zur Ansteuerung eines Stromrichterventils eines gesteuerten Serienkompensators wird auf die Zeichnung Bezug genommen, in der ein Ausführungsbeispiel einer erfindungsgemäßen Vorrichtung schematisch veranschaulicht ist.
- Figur 1: zeigt einen gesteuerten Serienkompensator mit einer Vorrichtung zur Erzeugung eines Sychronisiersignals mit nachgeschaltetem Steuersatz, in der
- Figur 2: ist in einem Diagramm über der Zeit t die Kondensatorspannung dargestellt, die
- Figur 3: zeigt in einem Diagramm über der Zeit t den Verlauf des Leitungsstromes, die
- Figur 4: zeigt in einem Diagramm über der Zeit t den Verlauf des Kondensatorstromes, wobei in
- Figur 5: in einem Diagramm über der Zeit t der Verlauf des Ventilstromes näher dargestellt ist, die
- Figur 6: zeigt ein Blockschaltbild der Vorrichtung zur Erzeugung eines Synchronisiersignals, in
- Figur 7: ist der nähere Aufbau der Nachlaufsynchronisation der Vorrichtung nach Figur 6 näher dargestellt und in
- Figur 8: ist ein Blockschaltbild einer Einrichtung zur Amplitudenanpassung nach Figur 6 näher dargestellt.

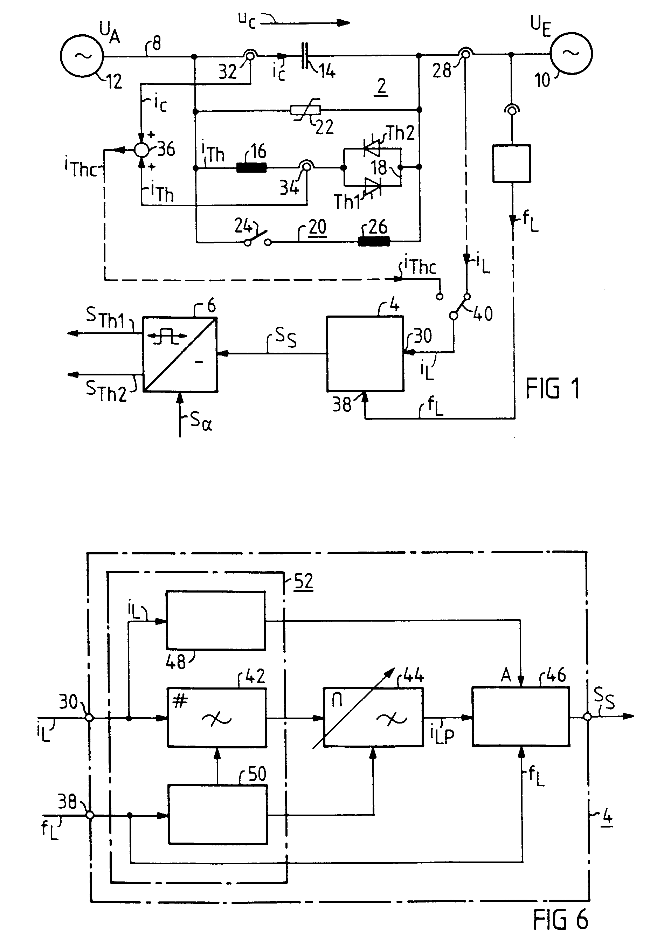

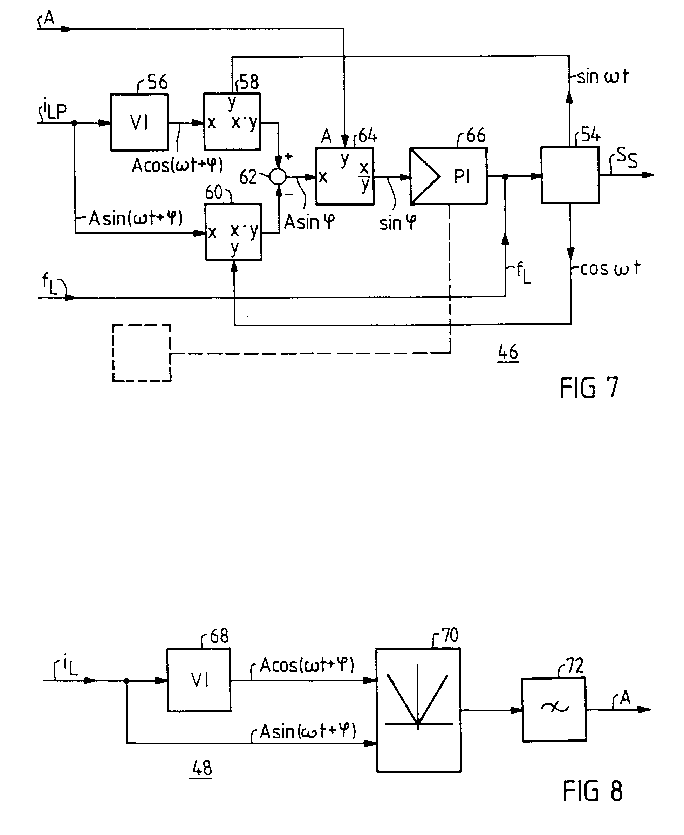

Die Figur 1 zeigt ein Ersatzschaltbild eines gesteuerten Serienkompensators 2 mit einer Vorrichtung 4 zur Erzeugung eines Steuersignals S_{S}, das einem nachgeschalteten Steuersatz 6 zugeführt ist. Ein Blockschaltbild der Vorrichtung 4 zur Erzeugung eines Synchronisisersignals ist in der Figur 6 näher dargestellt, wobei in der Figur 7 und 8 jeweils Elemente dieser Vorrichtung im einzelnen näher dargestellt sind. Der Steuersatz 6 sorgt für eine zeitsynchrone Ansteuerung zweier Thyristoren Th1 und Th2. Dieser Steuersatz 6 setzt Zündimpulse S_{Th1} und S_{Th2} ab, die aus einem Synchronisiersignal S_{S} und einem gewünschten, auf diesen bezogenen Steuerwinkel S_{α} ermittelt werden. Der gesteuerte Serienkompensator 2, der auch als ASC (Advenced Series Compensation) bekannt ist, ist als Reihenwiderstand in einer Übertragungsleitung 8 integriert. Dies geschieht in den meisten Fällen im Zuge der Leitung 8, erfolgt aber auch am Ausgang bzw. Eingang von Schaltstationen. Am Leitungsanfang und am Leitungsende sind jeweils Spannungsquellen 10 und 12 angegeben, deren Spannungen U_{E} und U_{A} sich in der Amplitude um einen Leitungsspannungsabfall ΔU unterscheiden und in einem Spannungsverdrehwinkel ϑ phasenverschoben sind. Die Spannung U_{A} am Leitungsanfang wird auch als sendende Spannung U_{A} und die Spannung U_{E} am Leitungsende wird auch als Verbraucherspannung U_{E} bezeichnet.

Der Aufbau einer gesteuerten Serienkompensationsanlage 2 kann in drei Bereiche unterteilt werden. Der Kern einer solchen Anlage 2 besteht aus einem Kondensator 14, welcher in die Übertragungsleitung 8 seriell integriert ist. Hiermit erreicht man eine Kompensation der induktiven Längsimpedanz der Leitung 8, welche für den induktiven Blindleistungsanteil veranwortlich ist. Parallel zum Serienkondensator 14 wird bei einer gesteuerten Serienkompensationsanlage 2 ein Zweig, bestehend aus einer Spule 16 und einem Stromrichterventil 18, hinzugeschaltet. Als Stromrichterventil 18 ist eine Parallelschaltung zweier Thyristoren Th1 und Th2 dargestellt, die antiparallel zueinander angeordnet sind. Mittels dieser beiden Thyristoren Th1 und Th2 kann die Spule 16 zu vorbestimmten Zeitpunkten eingeschaltet werden. Anstelle der Thyristoren Th1 und Th2 können auch andere Halbleiterventile, beispielsweise GTO-Thyristoren (Gate-turn-off-Thyristoren) verwendet werden. Mittels dieses Zweiges besteht die Möglichkeit, durch eine Phasenanschnittsteuerung die wirksame Impedanz des gesteuerten Serienkompensators 2 kontinuierlich kapazitiv und induktiv zu verändern. Dadurch kann man neben der Erhöhung der übertragungsleistung auch noch im Fehlerfall auf der Leitung 8 einen Kurzschlußstrom begrenzen. Die aufgezählten Vorteile beim Einsatz von Reihenkondensatoren, die im Lehrbuch "Reihenkondensatoren in elektrischen Netzen", von Dr.-Ing. Leonhard Müller, 1967, Seite 4, gelten auch für einen gesteuerten Serienkompensator 2.

Zum Schutz des Kondensators 14, der Spule 16 und des Stromrichterventils 18 vor Überlastung durch zu hohe Leitungsströme i_{L} sind parallel zu diesen Elementen 14 oder 16 und 18 ein Nebenweg 20 (Bypass) und ein nichtlinearer Widerstand 22, auch Ableiter genannt, eingebaut. Als nichtlinearer Widerstand 22 ist beispielsweise ein Metalloxid-Varistor (MOV) vorgesehen. Dieser elektrisch parallel zum Serienkondensator 14 geschaltete Metalloxid-Varistor 22 ist so dimensioniert, daß bei einer vorbestimmten Spannungsamplitude dieser Ableiter 22 sehr schnell die Stromführung übernimmt und somit den Serienkondensator 14 vor länger andauernden Überlastzuständen schützt. Das Energieaufnahmevermögen eines nichtlinearen Widerstandes 22 ist aufgrund wirtschaftlicher Überlegungen natürlich begrenzt und somit benötigt eine Serienkompensationsanlage 2 auch die Möglichkeit, den Serienkondensator 14 mit seinem Ableiter 22 vor überlastungen zu schützen. Diese Aufgabe wird von dem parallelen Nebenweg 20 übernommen. Dieser Bypass 20 besteht aus einem Bypass-Schalter 24 und aus einem Dämpfungskreis 26. Der Bypass-Schalter 24 wird geschlossen, sobald die Belastung, d.h. das Energieaufnahmevermögen des Ableiters 22, erschöpft ist.

Mittels einer Einrichtung 28 wird der Istwert des Leitungsstromes i_{L} ermittelt und einem Amplitudeneingang 30 der Vorrichtung 4 zur Erzeugung eines Synchronisiersignals zugeführt. Mittels einer Einrichtung 32 wird der Istwert des Kondensatorsstroms i_{c} und mittels einer Einrichtung 34 wird der Istwert des Ventilstroms i_{Th} ermittelt und einem Verknüpfungsglied 36 zugeführt, dessen Ausgang mit dem Amplitudeneingang 30 der Vorrichtung 4 zur Erzeugung eines Synchronisiersignals verknüpft werden kann. Einem Frequenzeingang der Vorrichtung 4 zur Erzeugung eines Synchronisiersignals wird ein Istwert der Frequenz f_{L} der Übertragungsleitung 8 zugeführt. Die Systemgrößen i_{L}, i_{Thc} und f_{L} werden über ein Lichtleitersystem potentialfrei von der auf Hochspannungspotential befindlichen Anlage 2 zur Vorrichtung 4 zur Erzeugung eines Synchronisiersignals S_{S} geführt, die auf Erdpotential ist. Diese potentialfreie Übertragung der Systemgrößen i_{L}, f_{L} und i_{THc} sind durch eine unterbrochene Linie dargestellt.

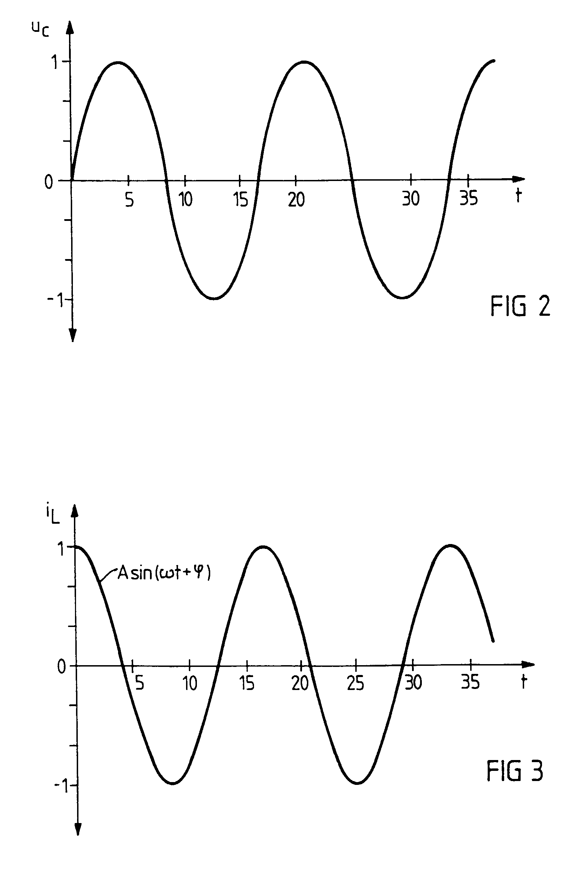

Die Figur 2 zeigt in einem Diagramm über der Zeit t den Verlauf der Kondensatorspannung u_{c}, die über dem Kondensator 14 des gesteuerten Serienkompensators 2 nach Figur 1 abfällt. Diesem Diagramm kann entnommen werden, daß die Kondensatorspannung u_{c} eine nicht sinusförmige Größe ist, die sich ändernde Nulldurchgänge (Umladevorgang) aufweist. Wie eingangs schon erwähnt, ergeben sich daraus Betriebsstabilitätsprobleme, da der Steuersatz nicht mehr für eine zeitsynchrone Ansteuerung der Ventile Th1 und Th2 sorgen kann. Aus den Nulldurchgängen der Kondensatorspannung u_{c} bzw. der Synchronisierspannung werden die Startpunkte einer Rampe generiert, welche mit einer dem Steuerwinkel reproduzierbaren Geraden Scnnittpunkte ergibt, die die Zeitpunkte der Ventilansteuerung sind.

In der Figur 3 ist in einem Diagramm über der Zeit t der Verlauf des gemessenen Leitungsstromes i_{L} dargestellt, der gegenüber dem Verlauf der Kondensatorspannung u_{c} um 90° el. voreilt. Dieser Verlauf ist sinusförmig, deren Nulldurchgänge sich nicht verschieben. Dieser gemessene Leitungsstrom i_{L} wird dem Amplitudeneingang 30 der Vorrichtung 4 zur Erzeugung eines Synchronisiersignals S_{S} zugeführt.

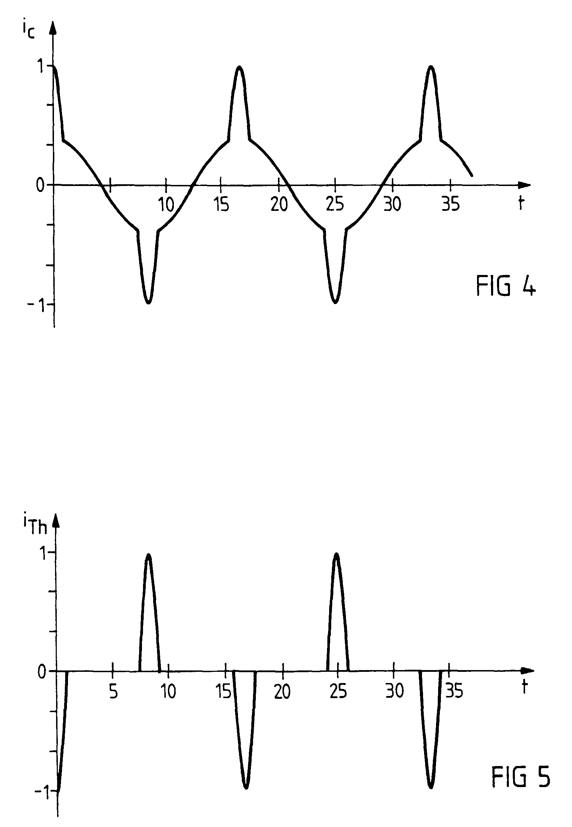

In der Figur 4 ist in einem Diagramm über der Zeit t der Verlauf des gemessenen Kondensatorstromes i_{c} und in Figur 5 ist in einem Diagramm über der Zeit t der Verlauf des gemessenen Ventilstromes i_{Th} näher dargestellt. Die daraus gebildete Ersatzgröße i_{Thc}, die nicht näher dargestellt ist, ist die Summe des Kondensatorstromes i_{c} und des Ventilstromes i_{Th}. Diese Ersatzgröße i_{Thc} ist ebenfalls sinusförmig und eilt der Kondensatorspannung u_{c} um 90° el. vor. Auch diese Ersatzgröße i_{Thc} kann anstelle des gemessenen Leitungsstromes i_{L} der Vorrichtung 4 zur Erzeugung eines Synchronisiersignals S_{S} zugeführt werden. Dies ist in Figur 1 durch einen Umschalter 40 dargestellt.

Die Figur 6 zeigt ein Blockschaltbild der Vorrichtung 4 zur Erzeugung eines Synchronisiersignals S_{S}. Die Vorrichtung 4 enthält einen digitalen Filter 42, einen analogen Filter 44, eine Nachlaufsynchronisation 46, eine Einrichtung 48 zur Amplitudenanpassung und eine Einrichtung 50 zur Frequenzanpassung. Das Digitalfilter 42 und die Einrichtung 48 zur Amplitudenanpassung ist eingangsseitig mit dem Amplitudeneingang 30 der Vorrichtung 4 verknüpft. Ausgangsseitig ist das Digitalfilter 42 über das Analogfilter 44 mit einem Signaleingang der Nachlaufsynchronisation 46 verbunden. Der Ausgang der Einrichtung 48 zur Amplitudenanpassung ist mit einem Amplitudeneingang der Nachlaufsynchronisation 46 verknüpft. Die Einrichtung 50 zur Frequenzanpassung ist eingangsseitig mit dem Frequenzeingang 38 der Vorrichtung 4 und ausgangsseitig jeweils mit einem Steuereingang der Filter 42 und 44 verknüpft. In einer vorteilhaften Ausführungsform der Vorrichtung 4 ist die Einrichtung 48 und 50 und das Digitalfilter 42 durch einen digitalen Signalprozessor 52 realisiert. Analog-Digital-Wandler und Digital-Analog-Wandler, die bei einer digitalen/analogen Verarbeitung eines analogen Signals benötigt werden, sind in der Figur 6 nicht näher dargestellt.

Das Digitalfilter 42 besteht im wesentlichen aus einem Bandpass mit Sperrfilter, auch Notch-Filter genannt, die zur selektiven Unterdrückung eines bestimmten Frequenz benötigt werden. Die verwendeten Sperrfilter sind auf die 2. und 3. Harmonische der Netzfrequenz f_{L} abgestimmt, so daß diese störenden Einflüsse zumindest stark abgeschwächt werden. Die Abschwächung ist von der Güte des Filters abhängig. Neben der Abschwächung der Störeinflüsse erhält man auch eine Phasenverschiebung, die kleiner ist als 90° el.. Da die Netzfrequenz f_{L} in einem gewissen Bereich schwanken kann, benötigt das Digitalfilter 42 eine Anpassung auf diese schwankende Netzfrequenz f_{L}. Die Anpassung erfolgt durch Änderung der Abtastzeit. Die Einrichtung 50 ermittelt die Frequenzabweichung und generiert ein der Frequenz proporionales Signal, das dem Digitalfilter 42 zugeführt wird. Das Analogfilter 44, das als Glättungsfilter vorgesehen ist, erhält von der Einrichtung 50 ebenfalls ein Signal, das die Filterkoeffizienten verstimmt. Auch dieses Analogfilter 44 macht eine Phasenverschiebung, die kleiner ist als 90° el.. Die Summe der Phasenverschiebungen des Digitalfilters 42 und des Analogfilters 44 ist ebenfalls kleiner als 90° el.. Der Aufbau der Einrichtung 48 zur Amplitudenanpassung ist in Figur 8 als Blockschaltbild näher dargestellt.

Ebenso ist der nähere Aufbau der Nachlaufsynchronisation 46 als Blockschaltbild in der Figur 7 dargestellt.

Die Nachlaufsynchronisation 46, auch Phase-Locked-Loop (PLL) genannt, hat die Aufgabe, die Frequenz einer Oszillatoreinrichtung 54 so einzustellen, daß kein Phasenfehler ϕ mehr auftritt. Das Ausgangsignal i_{LP} des Fiters 44 wird einerseits über einen Vektoridentifizierer 56 einem Multiplizierer 58 und andererseits einem anderen Mulitplizierer 60 direkt zugeführt. Einem zweiten Eingang des Multiplizierers 58 wird von der Oszillatoreinrichtung 54 eine Sinusschwingung mit der Frequenz ωt und der Amplitude Eins und einem zweiten Eingang des Multiplizierers 60 wird von der Oszillatoreinrichtung 54 eine Kosinusschwingung ebenfalls mit der Frequenz ωt und der Amplitude Eins zugeführt. Der Ausgang des Multiplizierers 58 ist mit einem positiven Eingang eines Vergleichers 62 verbunden, wogegen sein negativer Eingang mit dem Ausgang des zweiten Multiplizierers 60 verknüpft ist. Dem Ausgang des Vergleichers 62 ist ein Dividierer 64 nachgeschaltet, an dessem zweiten Eingang das Ausgangssignal A der Einrichtung 48 zur Amplitudenanpassung ansteht. Ausgangsseitig ist dieser Dividierer 64 mit einem Regler 66, insbesondere mit einem Proportional-Integral-Regler (PI-Regler), verknüpft, der ausgangsseitig mit der Oszillatoreinrichtung 54 verbunden ist. Am Ausgang der Oszillatoreinrichtung 54 steht das Synchronisiersignal S_{S} an.

Das Eingangssignal i_{LP} der Nachlaufsynchronisation 46 wird mittels des Vektoridentifizierers 56 um 90° el. phasenverschoben, so daß am Ausgang sich eine Kosinusschwingung einstellt. Ein derartiger Vektoridentifizierer 56 ist im Aufsatz "Koordinatentransformationen für Mehrgrößen-Regelsysteme zur Kompensation und Symmetrierung von Drehstromnetzen" von W.Meusel und H.Waldmann, abgedruckt in der DE-Zeitschrift "Siemens Forsch.-u.Entwickl.-Ber.", Bd.6, 1977, Nr.1, Seiten 29 bis 38, vorgestellt. Diese Kosinusschwingung wird mit der Sinusschwingung der Oszillatoreinrichtung 24 multipliziert. Der Multiplizerer 60 multipliziert eine Sinusschwingung mit einer Kosinusschwingung. Am Ausgang des Verlgeichers 62 steht das Signal A·sinϕ an. Mittels des Dividierers 64 findet eine Amplitudennormierung statt, d.h., das Ausgangssignal A·sinϕ des Vergleichers 62 wird durch das Ausgangssignal A der Einrichtung 48 zur Amplitudenanpassung geteilt, so daß am Ausgang des Dividierers 64 das Signal sinϕ ansteht. Der nachfolgende Regler 66 regelt diese Phasenverschiebung ϕ solange aus, bis am Ausgang des Vergleichers 62 Null ansteht.

In der Figur 8 ist das Blockschaltbild der Einrichtung 48 zur Amplitudenanpassung gemäß der Figur 6 dargestellt, womit man die Amplitude A des gemessenen Leitungsstromes i_{L} berechnen kann. Der Leitungsstrom i_{L} wird einerseits über einen Vektoridentifizierer 68 einem Betragsbildner 70 und andererseits direkt diesem Betragsbildner 70 zugeführt. Dem Ausgang des Betragsbildners 70 ist ein Glättungsfilter 72 nachgeschaltet, an dessen Ausgang das Amplitudensignal A ansteht. Da die Elemente 68, 70 und 72 der Einrichtung 48 im einzelnen bekannt sind, wird auf eine nähere Beschreibung verzichtet.

Mit diesem erfindungsgemäßen Verfahren und der erfindungsgemäßen Vorrichtung wird aus einer Ersatzgröße, die sinusförmig ist, durch eine einfache Weiterverarbeitung, die vorteilhafterweise mittels eines Mikrocomputers geschieht, ein zur Kondensatorspannung u_{c} des Kondensators 14 des gesteuerten Serienkompensators 2 synchrones Synchronisiersignal S_{S} erzeugt, wodurch die Nachteile bei der Verwendung der Kondensatorspannung u_{c} als Synchronisiersignal S_{S} vermieden werden.

## Patentansprüche

1. Verfahren zur Erzeugung eines Synchronisiersignals (S_{S}) für einen Steuersatz (6) eines gesteuerten Serienkompensators (2), dessen Kondensator (14) seriell in eine Übertragungsleitung (8) eingebunden ist und dazu einen Parallelzweig, bestehend aus einer Spule (16) und einem Stromrichterventil (18), aufweist, mit folgenden Verfahrensschritten:
a) Messung eines Leiterstromes (i_{L}) der Übertragungsleitung (8),
b) Ermittlung der Amplitude (A) dieses gemessenen Leiterstromes (i_{L}),
c) Phasenverschiebung dieses gemessenen Leiterstromes (i_{L}) um 90° el.,
d) Multiplikation des gemessenen Leiterstromes (i_{L}) und des phasenverschobenen Leiterstromes jeweils mit einer um 90° el. phasenverschobenen, von einer nachlaufsynchronisierten Oszillatoreinrichtung (54) an einem ersten bzw. zweiten Ausgang erzeugten Winkelfunktion (cosωt, sinωt),
e) Ermittlung eines Vergleichssignals (A·sinϕ), indem das gebildete Produkt aus phasenverschobenem Leiterstrom und der Winkelfunktion (sinωt) vom gebildeten Produkt aus gemessenem Leiterstrom (i_{L}) und der Winkelfunktion (cosωt) subtrahiert wird,
f) Ermittlung eines Phasenfehlersignals (sinϕ), indem das ermittelte Vergleichssignal (A·sinϕ) durch die ermittelte Amplitude (A) geteilt wird und
g) Ausregelung eines Phasenfehlersignals (sinϕ) des gemessenen Leiterstromes (i_{L}) mittels einer Nachlaufsynchronisierung der Oszillatoreinrichtung (54), bis das ermittelte Vergleichssignal (A·sinϕ) gleich Null ist, wodurch dann an einem dritten Ausgang dieser Oszillatoreinrichtung (54) das Synchronisiersignal (Sₛ) ansteht.

2. Verfahren zur Erzeugung eines Synchronisiersignals (Sₛ) nach Anspruch 1, wobei zur Generierung des Synchronisiersignales (S_{S}) anstelle des Leiterstromes (i_{L}) der Übertragungsleitung (8) ein Ersatzsignal (i_{Thc}), verwendet wird, das aus einem gemessenen Ventilstrom (i_{TH}) und einem gemessenen Kondensatorstrom (i_{c}) des gesteuerten Serienkompensators (2) durch Addition erzeugt wird.

3. Verfahren nach Anspruch 1 oder 2,wobei Störsignale im gemessenen Leiterstrom (i_{L}) oder im gebildeten Ersatzsignal (i_{Thc}) wie folgt unterdrückt werden:
a) Selektive Unterdrückung von Harmonischen der Netzfrequenz (f_{L}) und
b) Glättung dieses selektiv gefilterten Leiterstromes (i_{L}).

4. Verfahren nach Anspruch 3, wobei jeweils die selektive Filterung und die Glättung an eine schwankende Netzfrequenz (f_{L}) angepaßt werden, indem eine Frequenzabweichung der Netzfrequenz (f_{L}) ermittelt wird, die als Korrektursignal für die selektive Filterung und für die Glättung verwendet wird.

5. Vorrichtung (4) zur Durchführung des Verfahrens zur Erzeugung eines Synchronisiersignals (S_{S}) für einen Steuersatz (6) eines gesteuerten Serienkompensators (2) nach Anspruch 1, dessen Kondensator (14) und eine Stromerfassungseinrichtung (28) seriell in eine Übertragungsleitung (8) eingebunden ist, wobei ein Ausgang dieser Stromerfassungseinrichtung (28) mit einem Amplitudeneingang (30) der Vorrichtung (4) verknüpft ist, wobei diese Vorrichtung (4) eine Nachlaufsynchronisation (46) und eine Einrichtung (48) zur Amplitudenanpassung enthält, wobei diese Einrichtung (48) eingangsseitig mit dem Amplitudeneingang (30) und ausgangsseitig mit einem Eingang der Nachlaufsynchronisation (46) verknüpft ist, die ebenfalls eingangsseitig mit dem Amplitudeneingang (30) verbunden ist, und wobei der Eingang dieser Nachlaufsynchronisation (46) einerseits über eine Vorrichtung zur Generierung einer um 90° zum Leitungsstrom (i_{L}) nacheilenden Schwingung (56) mit einem ersten Multiplizierer (58) und andererseits direkt mit einem zweiten Multiplizierer (60) verbunden ist, deren Ausgänge über einen Vergleicher (62) mit einem Dividierer (64) verknüpft sind, an dessen zweitem Eingang ein ermitteltes Amplitudensignal (A) ansteht und dessen Ausgang mit einem Regler (66) verbunden ist, der ausgangsseitig mit einer Oszillatoreinrichtung (54) verknüpft ist, von deren Ausgängen, die mit 90° verschoben sind, zwei mit jeweils einem Eingang der beiden Multiplizierer (58,60) verbunden sind und ein dritter Ausgang den Ausgang der Nachlaufsynchronisation (46) bildet, an dem ein Synchronisiersignal (Sₛ) ansteht.

6. Vorrichtung (4) nach Anspruch 5, wobei elektrisch in Reihe mit dem Kondensator (14) und mit dem Stromrichterventil (18) jeweils eine Stromerfassungseinrichtung (32, 34) geschaltet sind, deren Ausgänge mit einem Verknüpfungsglied (36) verbunden sind, dessen Ausgang anstelle der Stromerfassungseinrichtung (28) mit dem Amplitudeneingang (30) der Vorrichtung (4) verknüpft ist.

7. Vorrichtung (4) nach Anspruch 5, wobei der Nachlaufsynchronisation (46) eine Filterkette, bestehend aus einem digitalen Filter (42) und einem analogen Filter (44), vorgeschaltet ist.

8. Vorrichtung (4) nach Anspruch 7, wobei eine Einrichtung (50) zur Frequenzanpassung vorgesehen ist, die eingangsseitig mit einem Frequenzeingang (38) der Vorrichtung (4) und ausgangsseitig jeweils mit einem Steuereingang der Filter (42, 44) der Filterkette verknüpft ist.

9. Vorrichtung (4) nach Anspruch 5, 7 und 8, **dadurch gekennzeichnet**, daß die Einrichtung (48) zur Amplitudenanpassung, die Einrichtung (50) zur Frequenzanpassung und ein erstes Filter (42) der Filterkette mittels eines digitalen Signalprozessors realisiert sind.

10. Vorrichtung (4) nach Anspruch 5, wobei die Nachlaufsynchronisation (46) mittels eines digitalen Signalprozessors realisiert ist.

## Claims

1. A process for generating a synchronising signal (S_{S}) for a control unit (6) of a controlled series compensator (2), the capacitor (14) of which is serially integrated into a transmission line (8) and for this purpose comprises a parallel branch consisting of a coil (16) and a power converter valve (18), with the following process steps:
a) measuring of a line current (i_{L}) of the transmission line (8);
b) determining the amplitude (A) of this measured line current (i_{L});
c) shifting the phase of this measured line current (i_{L}) by 90°;
d) in each case multiplying the measured line current (i_{L}) and the phase-shifted line current by an angular function (cosωt, sinωt) shifted in phase by 90° generated by a follow-up-synchronised oscillator device (54) at a first and second output respectively;
e) determining a comparison signal (A ·sinϕ) by subtracting the formed product of phase-shifted line current and angular function (sinϕ) from the formed product of measured line current (i_{L}) and angular function (cosϕ);
f) determining a phase error signal (sinϕ) by dividing the determined comparison signal (A · sinϕ) by the determined amplitude (A) and
g) correcting a phase error signal (sinϕ) of the measured line current (i_{L}) by follow-up synchronisation of the oscillator device (54) until the determined comparison signal (A ·sinϕ) is equal to zero, whereby the synchronising signal (S_{S}) then occurs at a third output of this oscillator device (54).

2. A process for generating a synchronising signal (S_{S}) according to Claim 1, wherein a substitute signal (i_{Thc}) generated, by addition, from a measured valve current (i_{TH}) and a measured capacitor current (i_{c}) of the controlled series compensator (2) is used to generate the synchronising signal (S_{S}) instead of the line current (i_{L}) of the transmission line (8).

3. A process according to Claim 1 or 2, wherein disturbance signals in the measured line current (i_{L}) or in the formed substitute signal (i_{Thc}) are suppressed as follows:
a) selective suppression of harmonics of the power network frequency (f_{L}) and
b) smoothing of this selectively filtered line current (i_{L}).

4. A process according to Claim 3, wherein in each case the selective filtering and the smoothing are adapted to a fluctuating power network frequency (f_{L}) in that a frequency deviation of the power network frequency (f_{L}) is determined which is used as correction signal for the selective filtering and for the smoothing.

5. A device (4) for implementing the process for generating a synchronising signal (S_{S}) for a control unit (6) of a controlled series compensator (2) according to Claim 1, whose capacitor (14) and a current detecting device (28) are serially integrated into a transmission line (8), wherein one output of this current detecting device (28) is coupled to an amplitude input (30) of the device (4), said device (4) comprising a follow-up synchroniser (46) and an amplitude matching device (48), which device (48) is coupled at its input to the amplitude input (30) and is coupled at its output to an input of the follow-up synchroniser (46) which is likewise connected at its input to the amplitude input (30), and wherein the input of this follow-up synchroniser (46) is connected on the one hand to a first multiplier (58) via a device for generating an oscillation (56) which lags the line current (i_{L}) by 90° and on the other hand is directly connected to a second multiplier (60) whose outputs are coupled via a comparator (62) to a divider (64) at whose second input a determined amplitude signal (A) occurs and whose output is connected to a controller (66) which at its output is coupled to an oscillator device (54), of whose outputs, which are offset by 90°, two are in each case connected to an input of the two multipliers (58, 60) and a third forms the output of the follow-up synchroniser (46) at which a synchronising signal (S_{S}) occurs.

6. A device (4) according to Claim 5, wherein a current detecting device (32, 34) is in each case electrically connected in series with the capacitor (14) and with the power converter valve (18), the outputs of said current detecting device (32, 34) being connected to a logic element (36) whose output is coupled to the amplitude input (30) of the device (4) instead of the current detecting device (28).

7. A device (4) according to Claim 5, wherein the follow-up synchroniser (46) is preceded by a filter chain comprising a digital filter (42) and an analogue filter (44).

8. A device (4) according to Claim 7, wherein a device (50) for frequency matching is provided, which device is coupled at its input to a frequency input (38) of the device (4) and is in each case coupled at its output to a control input of the filters (42, 44) of the filter chain.

9. A device (4) according to Claim 5, 7 and 8, characterised in that the amplitude matching device (48), the frequency matching device (50) and a first filter (42) of the filter chain are formed by a digital signal processor.

10. A device (4) according to Claim 5, wherein the follow-up synchronisation (46) is implemented by means of a digital signal processor.

## Revendications

1. Procédé pour la production d'un signal de synchronisation (S_{S}) pour un élément de commande (6) d'un compensateur série commandé (2) dont le condensateur (14) est inclus en série dans une ligne de transmission (8) et qui comporte une branche parallèle constituée d'une bobine (16) et d'une soupape de convertisseur statique (18), comportant les étapes suivantes :
a) mesure d'un courant de ligne (i_{L}) de la ligne de transmission (8),
b) détermination de l'amplitude (A) de ce courant de ligne (i_{L}) mesuré,
c) déphasage de 90° de ce courant de ligne (i_{L}) mesuré,
d) multiplication du courant de ligne (i_{L}) mesuré et du courant de ligne déphasé chacun par une fonction trigonométrique (cosωt, sinωt) qui est produite à une première et à une seconde sortie par un dispositif oscillateur (54) à synchronisation de poursuite et qui est déphasée de 90°,
e) détermination d'un signal de comparaison (A.sinϕ), le produit formé à partir du courant de ligne déphasé et de la fonction trigonométrique (sinωt) étant soustrait du produit formé à partir du courant de ligne (i_{L}) et de la fonction trigonométrique (cosωt),
f) détermination d'un signal d'erreur de phase (sinϕ), le signal de comparaison déterminé (A.sinϕ) étant divisé par l'amplitude déterminée (A), et
g) régulation d'un signal d'erreur de phase (sinϕ) du courant de ligne mesuré (i_{L}) au moyen d'une synchronisation de poursuite du dispositif oscillateur (54) jusqu'à ce que le signal de comparaison déterminé (A.sinϕ) soit égal à zéro, le signal de synchronisation (S_{S}) se trouvant alors à une troisième sortie de ce dispositif oscillateur (54).

2. Procédé pour la production d'un signal de synchronisation (S_{S}) selon la revendication 1, dans lequel on utilise pour la production du signal de synchronisation (S_{S}), à la place du courant de ligne (i_{L}) de la ligne de transmission (8), un signal de remplacement (i_{Thc}) qui est produit par addition d'un courant de soupape (i_{TH}) mesuré et d'un courant de condensateur (i_{c}) mesuré du compensateur série commandé (2).

3. Procédé selon la revendication 1 ou 2, dans lequel on supprime des signaux parasites dans le courant de ligne mesuré (i_{L}) ou dans le signal de remplacement formé (i_{Thc}) de la manière suivante :
a) suppression sélective d'harmoniques de la fréquence de réseau (f_{L}), et
b) lissage de ce courant de ligne (i_{L}) filtré sélectivement.

4. Procédé selon la revendication 3, dans lequel on adapte à chaque fois le filtrage sélectif et le lissage à une fréquence de réseau variable (f_{L}) en déterminant un écart de la fréquence de réseau (f_{L}) qui est utilisé comme signal de correction pour le filtrage sélectif et pour le lissage.

5. Dispositif (4) pour la mise en oeuvre du procédé pour la production d'un signal de synchronisation (S_{S}) destiné à un élément de commande (6) d'un compensateur série commandé (2) selon la revendication 1, dont le condensateur (14) et un dispositif de détection de courant (28) sont inclus en série dans une ligne de transmission (8), dans lequel une sortie de ce dispositif de détection de courant (28) est reliée à une entrée d'amplitude (30) du dispositif (4), ce dispositif (4) contient une synchronisation de poursuite (46) et un dispositif (48) pour l'adaptation d'amplitude, ce dispositif (48) est relié en entrée à l'entrée d'amplitude (30) et en sortie à une entrée de la synchronisation de poursuite (46) qui est aussi reliée en entrée à l'entrée d'amplitude (30), et dans lequel l'entrée de cette synchronisation de poursuite (46) est reliée d'une part par l'intermédiaire d'un dispositif pour la production d'une oscillation (56) en retard de 90° par rapport au courant de ligne (i_{L}) à un premier multiplicateur (58) et d'autre part directement à un second multiplicateur (60), les sorties de ces multiplicateurs étant reliées par l'intermédiaire d'un comparateur (62) à un diviseur (64) dont la seconde entrée reçoit un signal d'amplitude (A) déterminé et dont la sortie est reliée à un régulateur (66) qui est relié en sortie à un dispositif oscillateur (54) dont deux des sorties, qui sont décalées de 90°, sont reliées chacune à une entrée des deux multiplicateurs (58, 60) et dont une troisième sortie forme la sortie de la synchronisation de poursuite (46) donnant un signal de synchronisation (S_{S}).

6. Dispositif (4) selon la revendication 5, dans lequel deux dispositifs de détection de courant (32, 34) sont branchés électriquement en série respectivement avec le condensateur (14) et avec la soupape de convertisseur statique (18), les sorties de ces dispositifs de détection de courant étant reliées à un élément combinatoire (36) dont la sortie est reliée à la place du dispositif de détection de courant (28) à l'entrée d'amplitude (30) du dispositif (4).

7. Dispositif (4) selon la revendication 5, dans lequel une chaîne de filtres composée d'un filtre numérique (42) et d'un filtre analogique (44) est branchée du côté amont de la synchronisation de poursuite (46).

8. Dispositif (4) selon la revendication 7, dans lequel il est prévu un dispositif (50) pour l'adaptation de fréquence qui est relié en entrée à une entrée (38) de fréquence du dispositif (4) et en sortie à chaque fois à une entrée de commande des filtres (42, 44) de la chaîne des filtres.

9. Dispositif (4) selon les revendications 5, 7 et 8, caractérisé par le fait que le dispositif (48) pour l'adaptation d'amplitude, le dispositif (50) pour l'adaptation de fréquence et un premier filtre (42) de la chaîne de filtres sont mis en oeuvre au moyen d'un processeur de signaux numériques.

10. Dispositif (4) selon la revendication 5, dans lequel la synchronisation (46) de poursuite est mise en oeuvre au moyen d'un processeur de signaux numériques.
